# EUROPÄISCHE PATENTSCHRIFT

(11) **EP 2 866 322 B1**
(45) Veröffentlichungstag und Bekanntmachung des Hinweises auf die Patenterteilung: **10.10.2018**
(21) Anmeldenummer: 13190402.1
(22) Anmeldetag: 27.10.2013
(51) Int. Cl.: H02G 3/22, F16L 5/10, H02G 3/08

(54) **Kabeldurchführungsvorrichtung**
Cable feed-through device
Dispositif de passage de câbles

(43) Veröffentlichungstag der Anmeldung: 29.04.2015
(73) Patentinhaber: Lapp Engineering & Co., 6330 Cham (CH)
(72) Erfinder: Drotleff, Rolf, D-75932 Deckenpfronn (DE); Müller, Daniel, D-71686 Remseck (DE); Bauer, Andreas, D-70193 Stuttgart (DE)
(74) Vertreter: Rutz & Partner

(56) Entgegenhaltungen:
- EP-A1- 1 231 693
- EP-A1- 1 363 376
- EP-A1- 1 892 448
- WO-A1-2010/124469
- WO-A2-2010/089291
- CH-A- 434 411
- FR-A1- 2 710 790
- GB-A- 2 350 872

## Beschreibung

Die Erfindung betrifft eine Vorrichtung zur Durchführung eines oder mehrerer Kabel, einschliesslich Leitungen, durch eine Trennwand, beispielsweise durch eine Gehäusewand im Eingangsbereich eines elektrischen Geräts oder eines Schaltschranks oder durch eine Gehäuseschale eines Steckverbinders.

Mittels einer Kabeldurchführungsvorrichtung soll die Trennfunktion der Trennwand vorzugsweise aufrechterhalten werden. An den Montagepositionen, an denen ein Kabel durch eine Öffnung in der Kabeldurchführungsvorrichtung hindurch geführt wird, soll die Öffnung abgedichtet werden, so dass entlang dem montierten Kabel keine Flüssigkeiten und/oder Gase durch die Trennwand in das elektrische Gerät oder den Steckverbinder eintreten können. Mittels der Kabeldurchführungsvorrichtung werden Kabel üblicherweise auch mechanisch fixiert, so dass sie beim Auftreten mechanischer Belastungen nicht von den Anschlusskontakten getrennt werden und eine so genannte Zugsentlastung realisiert wird.
Aus [1], EP1710886A1, ist eine solche Kabeldurchführungsvorrichtung bekannt, mittels der ein einzelnes Kabel abgedichtet durch eine Trennwand hindurch geführt werden kann. Derartige Durchführungsvorrichtungen sind relativ aufwändig ausgestaltet und benötigen relativ viel Raum, so dass mehrere Kabel anhand dieser Kabeldurchführungsvorrichtungen nur mit geringer Montagedichte installiert werden können. Falls eine grössere Anzahl von Kabeln durch eine Trennwand hindurch geführt werden muss, so nehmen die installierten Kabeldurchführungsvorrichtungen viel Raum in Anspruch. Weiterhin ergibt sich zur Montage dieser Kabeldurchführungsvorrichtungen ein hoher Installationsaufwand mit hohen Kosten für die installierten Kabeldurchführungsvorrichtungen. Ebenso ergibt sich ein entsprechend hoher Aufwand, falls die Installation geändert oder erweitert werden muss.
Aus [2], DE4310117A1, ist eine Kabeldurchführungsvorrichtung bekannt, bei der mehrere Kabel zwischen mehreren Lagen eines kompressiblen Materials hindurch geführt werden können. Auf die übereinander liegenden Lagen wird von einer Haltevorrichtung ein Druck ausgeübt, so dass die in Aussparungen zwischen den Lagen des kompressiblen Materials gelegenen Kabel mechanisch fixiert werden. Nachteilig hierbei ist, dass die Aussparungen sehr genau auf den Kabeldurchmesser abgestimmt werden müssen, da sonst die einzelnen Kabel nur ungenügend fixiert werden. Da die Druckverteilung nicht über die ganze Mehrfachdurchführung gleich ist, kann zudem die Stärke der Kabelklemmung variieren, so dass die Funktionen der Abdichtung und der Zugsentlastung bei einzelnen Kabeldurchführungen gegebenenfalls ungenügend ausgebildet sind. Die Qualität der Abdichtung und der Zugsentlastung, die mit dieser Kabeldurchführungsvorrichtung erzielt wird, erreicht somit nicht die Qualität, die mit einer Kabeldurchführungsvorrichtung erreicht werden kann, die der Durchführung nur eines Kabels dient.
Aus [3], EP1710882A2, ist eine Kabeldurchführungsvorrichtung bekannt, die der Durchführung mehrerer Kabel dient, und die für jede der Kabeldurchführungen ein einzelnes Kabeldurchführungsmodul aufweist. Die einzelnen Kabeldurchführungsmodule, die zusammengefasst die Kabeldurchführungsvorrichtung bilden, weisen alle etwa dieselbe Qualität der Abdichtung und der Zugsentlastung auf. Nachteilig ist hingegen, dass die Montage der Kabel aufgrund der hohen Anzahl an Einzelteilen zeitintensiv und komplex wird. Zudem ist auch bei dieser Kabeldurchführungsvorrichtung die Packungsdichte limitiert, da die einzelnen Kabeldurchführungsmodule nicht beliebig klein ausgeführt werden können.
Aus [4], EP2159463A1, ist eine Kabeldurchführungsvorrichtung bekannt, die eine Kombination einer komprimierbaren elastomeren Komponente und einer Gel-Komponente umfasst.

Die in [4] beschriebene Kabeldurchführungsvorrichtung weist einen PU-Elastomerkörper und einen PU-Gelkörper auf, die eine innige untrennbare Materialverbindung aufweisen, wobei der Weichkörper zur Anlage an eine Dichtfläche der Wand und/oder einer Leitung ausgelegt ist. Die Schaffung einer Kombination eines PU-Elastomerkörpers und eines PU-Gelkörpers, also zwei Körpern, die aus unterschiedlichen Materialien bestehen und die unterschiedliche Eigenschaften aufweisen, ergibt wiederum einen hohen Fertigungsaufwand.

Die EP1363376A1 offenbart eine Kabeldurchführung durch eine Gehäusewandung, mit einem eine Ausnehmung der Gehäusewandung verschliessenden Deckel, der zumindest ein Feld aus einer elastisch dehnbaren Folie aufweist, welches Feld von einem steiferen Abschnitt des Deckels umrahmt ist, wobei die Folie für die Bildung eines Kabeldurchtritts an wenigstens einer vorbestimmten Stelle durchstossbar ist.

Die EP1231693A1 offenbart eine Kabeleinführung durch eine Wandung, mit einem in die Wandung einsetzbaren Wandabschnitt der eine stufig konisch vorspringende Ausbuchtung aufweist, die einstückig mit dem Wandabschnitt aus hartem Kunststoff hergestellt ist. Die Innenfläche der Ausbuchtung ist mit weichelastischem Kunststoff beschichtet, und die Spitze der Ausbuchtung umgibt eine Öffnung, die vor Einführung des bzw. der Kabel von weich elastischem Kunststoff verschlossen ist.

Die CH434411A offenbart einen elektrischen Installationskasten mit einer Einführungsstelle mit einer splitter- und rissfrei durchstossbaren Membran, deren Querschnitt vom Mittelpunkt der Membran aus gegen die Peripherie stetig zunimmt.

Die WO2010/124469A1 offenbart eine Vorrichtung aus einem Elastomermaterial zur Durchführung eines oder mehrerer Kabel durch das Gehäuse eines elektronischen Geräts. Die Vorrichtung wird mittels umlaufenden Halterillen direkt in einer Ausnehmung des Gehäuses gehalten.

Die GB2350872 offenbart eine Vorrichtung zur Durchführung eines Kabels oder eines Rohres durch eine Wandung. Das durchgeführte Kabel oder Rohr wird durch an einer Scheibe angeordnete dreieckige Flügel mechanisch gehalten.

Der vorliegenden Erfindung liegt somit die Aufgabe zugrunde, eine einfach ausgestaltete und kostengünstig herstellbare Kabeldurchführungsvorrichtung zu schaffen.

Insbesondere ist eine Kabeldurchführungsvorrichtung zu schaffen, die es erlaubt, eines oder mehrere Kabel gut abgedichtet durch eine Trennwand hindurchzuführen.

Mittels der Kabeldurchführungsvorrichtung soll zudem eine Zugsentlastung vorteilhaft realisiert werden.

Kabel unterschiedlicher Durchmesser sollen mit einer hohen Packungsdichte und mit geringem Aufwand rasch in der Kabeldurchführungsvorrichtung montierbar sein.

Auch bei Leitungen mit unterschiedlichen Durchmessern sollen eine optimale Abdichtung und eine optimale Zugsentlastung gewährleistet sein, wie sie bei Kabeldurchführungsvorrichtungen mit nur einer Kabeldurchführung realisierbar sind.

Die Kabeldurchführungsvorrichtung soll zudem aus einer möglichst geringen Anzahl an Komponenten bestehen. Die Kabeldurchführungsvorrichtung soll die Trennfunktion der Trennwand, an der die Kabeldurchführungsvorrichtung installiert ist, optimal übernehmen, so dass die Trennfunktion unabhängig davon gewährleistet bleibt, ob Kabel installiert sind oder nicht.

Diese Aufgabe wird mit einer Kabeldurchführungsvorrichtung gelöst, welche die in Anspruch 1 angegebenen Merkmale aufweist. Vorteilhafte Ausgestaltungen der Erfindung sind in weiteren Ansprüchen angegeben.

Die Kabeldurchführungsvorrichtung, die der abgedichteten Durchführung eines Kabels durch eine Trennwand dient, z.B. durch eine Gehäusewand eines elektrischen Geräts oder durch eine Gehäuseschale eines Steckverbinders, umfasst einen Weichkörper, der zur abgedichteten Durchführung des Kabels geeignet ist.

Erfindungsgemäss weist der Weichkörper wenigstens eine der Durchführung des Kabels dienende Körperbohrung auf, innerhalb der wenigstens eine verschlossene Körpermembran vorgesehen ist, die durch Krafteinwirkung auftrennbar ist.

Der Weichkörper bildet praktisch die gesamte Kabeldurchführungsvorrichtung und kann mit einfachen Massnahmen entsprechend dimensioniert werden. Der Weichkörper kann beispielsweise mittels eines Giessverfahrens in einfacher Weise als Einheit gefertigt werden, welche den voluminösen Weichkörper sowie die Körpermembranen umfasst. In der Folge kann der Weichkörper, soweit dies überhaupt erforderlich ist gerahmt oder gefasst werden, so dass er in/an eine Öffnung in einer Trennwand, beispielsweise in eine Öffnung in einer Gehäusewand eines elektrischen Geräts oder in eine Öffnung einer Gehäuseschale eines Steckverbinders eingesetzt werden kann.

Durch die Möglichkeit, den Weichkörper in einem Guss zu fertigen, gelingt es, den Weichkörper mit minimalem Aufwand in komplexen Körperformen und beliebigen Körperbohrungen und Körpermembranen zu fertigen. Die Fertigung des Weichkörpers als eine einzige Einheit gelingt somit mit minimalem Fertigungsaufwand und Materialaufwand. Die Körpermembran kann optimal an die zu installierenden Kabel angepasst werden.

Der Weichkörper ist vorzugsweise ein Gelkörper, der auf einem Polyurethan-Gel-System oder einem Silikon-Gel-System basiert.

Der Weichkörper wird beispielsweise gefertigt, indem eine flüssige Polyol-Mischung und eine flüssige Isocyanat-Mischung in eine Gussform eingegossen oder unter Druck eingepresst werden.

Der Weichkörper kann ebenso aus Latex oder Gummi gefertigt werden. Die Eigenschaften des Weichkörpers können durch Zugabe weiterer Mittel wahlweise bestimmt werden.

Erfindungsgemäß wird Weichkörper mit mehreren Körperbohrungen versehen, innerhalb denen je wenigstens eine verschlossene Körpermembran vorgesehen ist.

Die Körperbohrungen weisen unterschiedliche Durchmesser auf so dass für Kabel mit unterschiedlichen Durchmessern jeweils passende Körperbohrungen vorliegen.

Durch die Verwendung eines elastischen und/oder gut haftenden Gels gelingt es, die Kabel und den Weichkörper bzw. Gelkörper optimal derart miteinander zu verbinden, dass eine gute Abdichtung und eine zuverlässige Zugsentlastung resultieren.

Die Körpermembran umfasst ein zentrales Durchstossteil, das von wenigstens einem konzentrisch dazu verlaufenden Ringelement umschlossen ist, dessen Dicke um wenigstens 50% höher ist als die Dicke der Körpermembran. Nach dem Aufbrechen des Durchstossteils, das mit einer Sollbruchstelle versehen sein kann, bildet das Ringelement eine am installierten Kabel anliegende Dichtungslippe, welche das Kabel mit relativ hohem Anpressdruck umschliesst.

Die Körperbohrung verjüngt sich vorzugsweise beidseitig der Körpermembran in der Form eines Trichters oder eines Konus gegen die Körpermembran. Dadurch wird das zu installierende Kabel beim Einführen in die Körperbohrung automatisch zentriert und gegen das Durchstossteil geführt. Das Kabel kann daher mit einem Handgriff in die Körperbohrung eingeführt werden, wonach die Körpermembran durchstossen und das Kabel durch die Trennwand beispielsweise in einen Schaltschrank, ein elektrisches Gerät oder einen Steckverbinder eingeführt werden kann.

Das Körpermaterial ist derart gewählt, dass die Körpermembran beim Durchstossen eines Kabels deformiert und gedehnt wird, so dass die Körpermembran eine Trichterform mit einem rohrförmigen Trichterhals annimmt, welcher das Kabel über eine Länge von vorzugsweise wenigstens einigen Millimetern dicht umschliesst. Auf diese Weise werden zwei vorteilhafte Effekte erzielt. Einerseits erfolgt eine Abdichtung über die gesamte Länge des Dichterhalses, welche einen unerwünschten Mediendurchtritt vollständig unterbindet. Andererseits erfolgt eine mechanisch stabile Verbindung zwischen dem Trichterhals und dem installierten Kabel, so dass dieses stabil gehalten bleibt.

In einer bevorzugten Ausgestaltung umfasst der Weichkörper zwei aneinander liegende Körpermodule mit Körperbohrungen, die koaxial zueinander verlaufen und die je wenigstens eine Körpermembran aufweisen. Auf diese Weise kann durch einen einfachen lapidaren Aufbau ein Weichkörper realisiert werden, der durchgehende Körperöffnungen aufweist, innerhalb denen, entsprechend der Anzahl der Körpermodule, mehrere Körpermembranen vorgesehen sind. Beim Einführen eines zu installierenden Kabels in eine der Körperbohrungen werden die Körpermembran daher seriell durchstossen, wonach die verbleibenden Ringelemente, die das Kabel dicht umschliessen, ein durchgehendes oder teilweise durchbrochenes Installationsrohr bilden können, welches einer hohen Zugbelastung standhält. Ferner gelingt durch die seriell hintereinander angeordneten Körpermembranen eine optimale Abdichtung, die auch aufrechterhalten bleibt, wenn eine der Körpermembranen einen Riss erleiden sollte.

Die beiden Körpermodule sind vorzugsweise identisch oder komplementär zueinander ausgestaltet und vorzugsweise formschlüssig miteinander koppelbar. Die entsprechende Ausgestaltung der Körpermodule, die einen stabilen Aufbau des Weichkörpers erlaubt, kann mit minimalem Aufwand realisiert werden.

Der Weichkörper besteht vorzugsweise aus einem Körpermaterial, welches gute Hafteigenschaften oder Klebeeigenschaften aufweist.

Alternativ kann in die Körperbohrungen ein Haftmittel oder ein Klebstoff eingefüllt werden, welches sich mit dem Weichkörper und den installierten Kabel verbinden kann. Die Körperbohrungen werden dazu vorzugsweise mit einer Folie abgedeckt, die bei der Installation eines Kabels entfernt wird. Nach der Entfernung der Folie gelangt Licht, Luft, Wärme oder eine Flüssigkeit in die Körperbohrung, wodurch das Körpermaterial bzw. der Gel oder der Klebstoff aktiviert wird. In einer vorzugsweisen Ausgestaltung ist der Weichkörper auf der Unterseite und/oder der Oberseite, die senkrecht zu den Körperbohrungen verlaufen, thermisch und/oder chemisch behandelt und dadurch mechanisch verfestigt. Nach dieser Behandlung weist der Weichkörper eine für die Installation genügende Eigenstabilität auf. Die Oberseite und/oder die Unterseite des Weichkörpers sind zu Platten verfestigt. Alternativ sind an der Oberseite und/oder der Unterseite des Weichkörpers formstabile erste und/oder zweite Grenzplatten aus hartem Kunststoff oder Metall, vorzugsweise Leichtmetall, vorgesehen.

Die Grenzplatten sind je mit Plattenbohrungen versehen, die etwa die gleichen Durchmesser wie die Körperbohrungen des Weichkörpers aufweisen und die konzentrisch dazu angeordnet sind.

Erfindungsgemäß wird der Weichkörper mit den Grenzplatten kraftschlüssig oder formschlüssig und lösbar innerhalb einer Rahmenstruktur gehalten. Die Rahmenstruktur ist mit Montageelementen versehen, mittels denen die Rahmenstruktur in einer Öffnung innerhalb der Trennwand montiert werden kann.

Vorzugsweise sind die Grenzplatten mit dem dazwischen gelagerten Weichkörper kraftschlüssig oder formschlüssig und lösbar innerhalb einer Rahmenstruktur gehalten, so dass die Kabeldurchführungsvorrichtung bedarfsweise aus der Rahmenstruktur gelöst und ersetzt werden kann.

Dazu weisen die Grenzplatten und die Rahmenstruktur vorzugsweise zueinander korrespondierende Kopplungselemente oder Rastelemente auf, die es erlauben, die Kabeldurchführungsvorrichtung rasch von der Rahmenstruktur zu lösen.

In einer weiteren Ausgestaltung ist der Weichkörper von einer Dichtungslippe umschlossen, die in die Rahmenstruktur eingreift und den Raum zwischen dem Weichkörper und der Rahmenstruktur dicht abschliesst. Diese Dichtungslippe bzw. eine entsprechende Ausformung oder Einformung im Weichkörper, die im Giessverfahren einfach geformt werden kann, dient zusätzlich der Fixierung des Weichkörpers innerhalb der Raumstruktur.

In besonders bevorzugten Ausgestaltungen kann der Weichkörper daher mit Kabeln bestückt und somit in einen vorkonfektionierten Kabelbaum integriert werden, der in einem Schritt in die Rahmenstruktur eingesetzt und daraus wieder entfernt und ersetzt werden kann.

Nachfolgend wird die Erfindung anhand von Zeichnungen näher erläutert. Dabei zeigt:
- Fig. 1a: eine erfindungsgemässe Kabeldurchführungsvorrichtung 1, die mehrere Durchführungsöffnungen 10A, 10B, ... aufweist und die einen Weichkörper 12 umfasst, an dem oben eine erste Grenzplatte 11 und unten eine zweite Grenzplatte 13 anliegt;
- Fig. 1b: den Weichkörper 12 in einer Schnittdarstellung entlang der in Figur 1a eingezeichneten Schnittlinie A--A mit mehreren Körperbohrungen ..., 120H, ..., 120N, ..., in denen je eine Körpermembran 121 angeordnet ist, die mit dem Weichkörper 12 eine Einheit bilden;
- Fig. 2: in Explosionsdarstellung den Weichkörper 12 und die beiden Grenzplatten 11, 13 in einer Schnittdarstellung entlang der in Figur 1a eingezeichneten Schnittlinie A--A;
- Fig. 3: in Explosionsdarstellung den Weichkörper 12 mit einer vorzugsweise ausgestalteten Grenzplatte 11, wobei die Grenzplatte 11 in einer Schnittdarstellung entlang der in Figur 1a eingezeichneten Schnittlinie A-A gezeigt ist;
- Fig. 4: den Weichkörper 12 und die beiden Grenzplatten 11, 13 in einer Schnittdarstellung entlang der in Figur 1a eingezeichneten Schnittlinie B--B mit einer Detaildarstellung einer Körpermembran 121, die innerhalb der Körperbohrung 120K angeordnet ist;
- Fig. 5a: den Weichkörper 12 in einer Schnittdarstellung entlang der in Figur 1a eingezeichneten Schnittlinie B--B während der Einführung eines Kabels oder einer Leitung 9 in eine der Körperbohrungen 120;
- Fig. 5b: den Weichkörper 12 in der Darstellung von Figur 5a mit der durchstossenen Körpermembran 1215, die eine Trichterform mit einem Trichterhals 12150 bildet, der in der Art eines Rohrsegments am Kabel oder der Leitung 9 anliegt und vorzugsweise damit verklebt ist;
- Fig. 6a: den Weichkörper 12 in einer vorzugsweisen Ausgestaltung mit zwei Körpermodulen 12A, 12B;
- Fig. 6b: die beiden miteinander verbundenen Körpermodule 12A, 12B von Figur 6a, die den Weichkörper 12 bilden;
- Fig. 7a: die in eine Rahmenstruktur 2 eingesetzte Kabeldurchführungsvorrichtung 1; und
- Fig. 7b: die in die Rahmenstruktur 2 eingesetzte Kabeldurchführungsvorrichtung 1 in Schnittdarstellung entlang der in Figur 7a gezeigten Schnittlinie C--C.

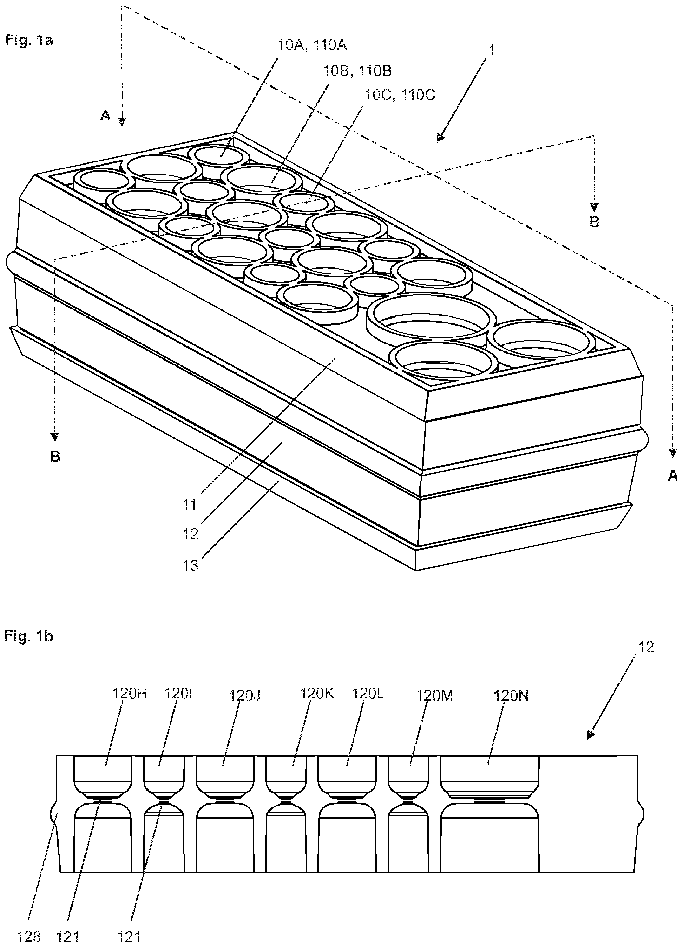

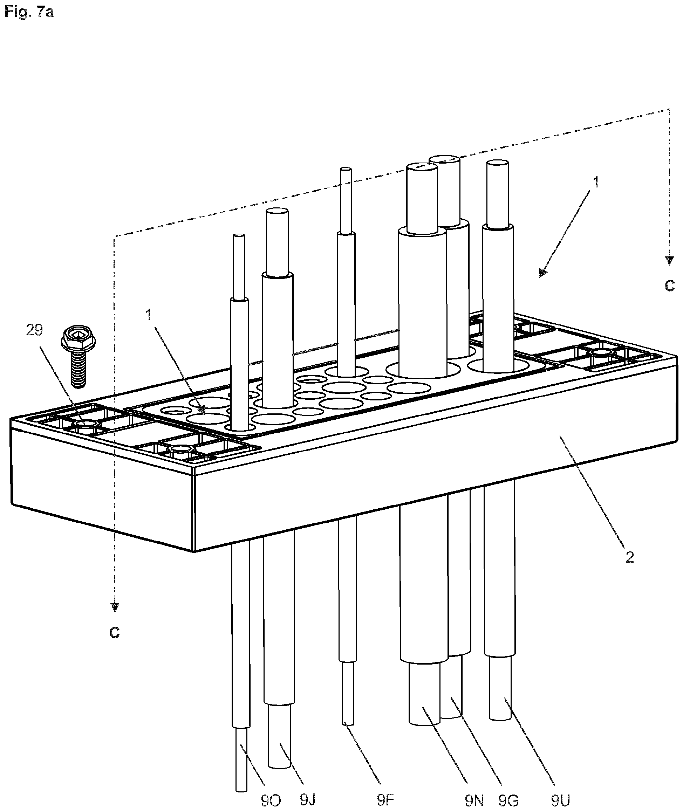

Figur 1a zeigt eine erfindungsgemässe Kabeldurchführungsvorrichtung 1, die mehrere Durchführungsöffnungen 10A, 10B, ... aufweist, durch die hindurch Kabel und Leitungen 9 geführt werden können, wie dies beispielsweise in Figur 7a gezeigt ist. Die Durchführungsöffnungen 10A, 10B, ... weisen unterschiedliche Durchmesser auf, so dass der Anwender eine dem Kabeldurchmesser angepasste Durchführungsöffnung 10A, 10B, ... auswählen kann.

Erfindungsgemässe Kabeldurchführungsvorrichtung 1 umfassen einen Weichkörper 12 sowie zumindest eine erste Grenzplatte 11, welche mit dem Weichkörper 12 verbunden ist. Der Weichkörper 12 und die erste Grenzplatte 11 weisen Körperbohrungen 120A, 120B, 120C, ... bzw. Plattenbohrungen 110A, 110B, 110C, ... auf, die konzentrisch zueinander angeordnet die Durchführungsöffnungen 10A, 10B, ... der Kabeldurchführungsvorrichtung 1 bilden.

Die Kabeldurchführungsvorrichtung 1 kann daher direkt an die Montagewand, beispielsweise die Gehäusewand eines elektrischen Geräts oder eines Schaltkastens angeschlagen werden, so dass der Weichkörper 12 direkt an der Gehäusewand anliegt und automatisch die Abdichtung zwischen der Kabeldurchführungsvorrichtung 1 und Montagewand vollzieht. Der Weichkörper 12 kann sich mit der Montagewand formschlüssig verbinden, weshalb auch kleinere Durchgangskanäle nicht auftreten können. Der Weichkörper 12 ist zwischen der Montagewand und der ersten Grenzplatte 11 somit stabil gehalten. Die Montagewand bildet in dieser Ausgestaltung eine zweite Grenzplatte 13, die Plattenbohrungen aufweisen kann die exakt zu den Durchführungsöffnungen 10A, 10B, ... der Kabeldurchführungsvorrichtung 1 korrespondieren. Alternativ kann eine grössere Öffnung in der Montagewand vorgesehen sein, deren Rand einen Flansch bildet, an dem der in sich geschlossene Aussenrand des Weichkörpers 12 anliegen kann. Auch auf diese Weise erfolgt eine dicht abschliessende Verbindungen zwischen der Montagewand und der Kabeldurchführungsvorrichtung 1.

Optional, wie in Figur 1a gezeigt, kann die Kabeldurchführungsvorrichtung 1 auch eine separate zweite Grenzplatte 13 umfassen, welche auf der der ersten Grenzplatte 11 gegenüber liegenden Seite des Weichkörpers 12 angebracht ist. Diese zweite Grenzplatte 13 weist in dieser vorzugsweisen Ausgestaltung ebenfalls Plattenbohrungen 130A, 130B, 130C, ... auf, die konzentrisch zu den Körperbohrungen 120A, 120B, 120C, ... des Weichkörpers 12 und den Plattenbohrungen 110A, 110B, 110C, ... der ersten Grenzplatte 11 bzw. koaxial zu den Durchführungsöffnungen 10A, 10B, ... der Kabeldurchführungsvorrichtung 1 angeordnet sind.

Figur 1b zeigt den Weichkörper 12 von Figur 1a in einer Schnittdarstellung entlang der in Figur 1a eingezeichneten Schnittlinie A--A. Der Weichkörper 12 weist mehrere Körperbohrungen 120H, 120I, ... auf, die vor der Montage der Kabel jeweils durch eine Körpermembran 121 dicht verschlossen sind.

In dieser Ausgestaltung umfasst der Weichkörper 12 zudem eine den ganzen Körper umlaufende Dichtungslippe 128. Mittels der Dichtungslippe 128 wird ein nach dem Einbau der Kabeldurchführungsvorrichtung 1 in eine Rahmenstruktur 2 (siehe Figur 7a) verbleibender Zwischenraum dicht abgeschlossen, so dass ein unerwünschter Durchtritt von Gasen und Flüssigkeiten verhindert wird.

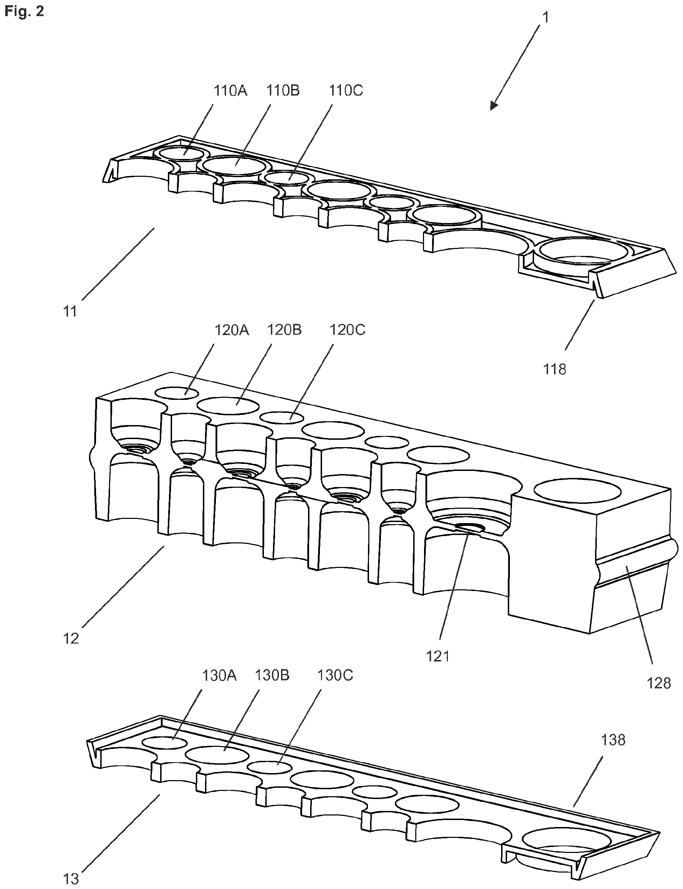

Figur 2 zeigt die entlang der Schnittlinie A--A geschnittene Kabeldurchführungsvorrichtung 1 von Figur 1 in einer Explosionsdarstellung. Die erste Grenzplatte 11 umfasst neben Plattenbohrungen 110A, 110B, ... auch ein umlaufendes Kopplungselement 118, welches die mechanische Befestigung in einer Rahmenstruktur 2 sicherstellen kann (siehe Figur 7a) . Das Kopplungselement 118 ist vorzugsweise als Rastelement ausgebildet, das in die Rahmenstruktur 2 einrasten und unter Krafteinwirkung wieder gelöst werden kann. Weiter ist das Kopplungselement 118 dazu geeignet, den Weichkörper 12 optimal mit der ersten Grenzplatte 11 zu verbinden.

Die optionale zweite Grenzplatte 13 ist in der gezeigten Ausgestaltung identisch aufgebaut wie die erste Grenzplatte 11. Die zweite Grenzplatte 13 umfasst ebenfalls Plattenbohrungen 130A, 130B, ... und ein umlaufendes Kopplungselement 138.

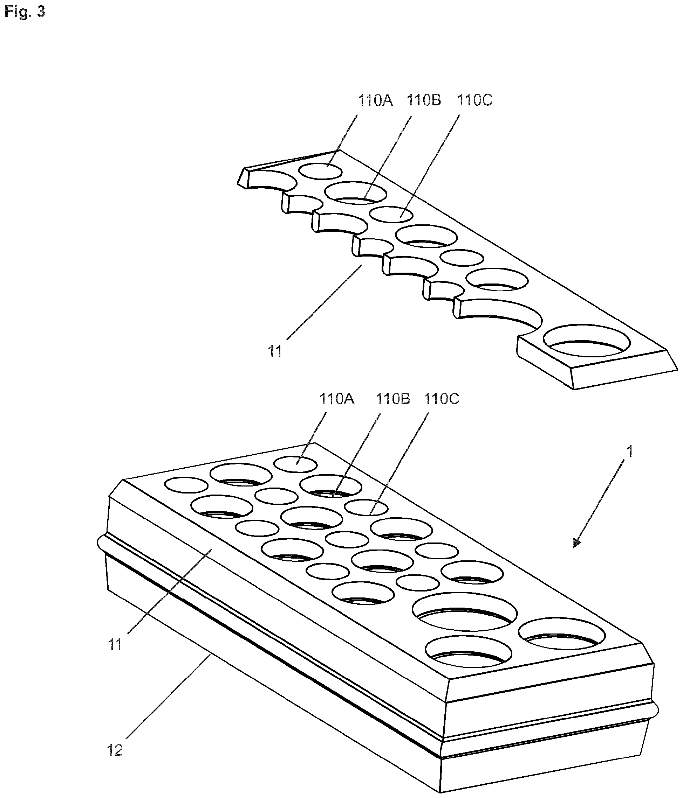

Figur 3 zeigt eine vorteilhafte Ausführung einer erfindungsgemässen Kabeldurchführungsvorrichtung 1 mit einer ersten Grenzplatte 11 und einem Weichkörper 12. Ebenso ist eine geschnittene Ansicht einer vorteilhaften Ausführung der ersten Grenzplatte 11 gezeigt.

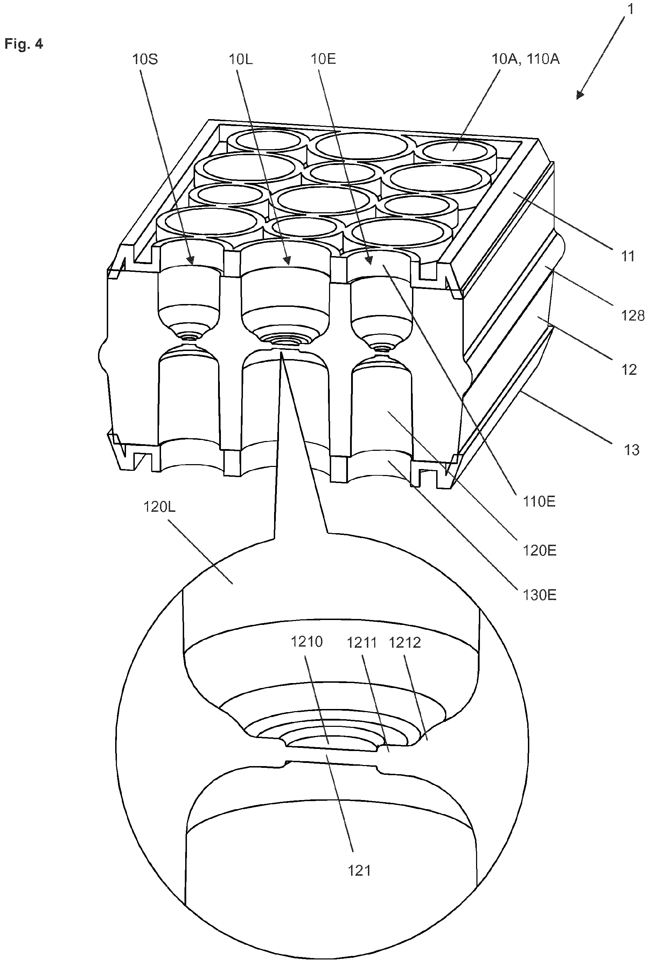

Figur 4 zeigt die Kabeldurchführungsvorrichtung 1 in einer Schnittdarstellung entlang der in Figur 1a eingezeichneten Schnittlinie B-B. Der Schnitt verläuft auf der Höhe der drei Durchführungsöffnungen 10E, 10L und 10S durch die erste Grenzplatte 11, den Weichkörper 12 und die zweite Grenzplatte 13.

Figur 4 zeigt in einer Detaildarstellung die in der Körperbohrung 120L vorgesehene Körpermembran 121. Die Körpermembran 121 ist stoffschlüssig mit dem Weichkörper 12 verbunden und beinhaltet ein Durchstossteil 1210, welches mit einem Kabel durchstossen werden kann. Der Übergang vom Durchstossteil 121 zum Weichkörper 12 ist so ausgeführt, dass das Durchstossteil 121 in dieser vorzugsweisen Ausgestaltung von konzentrischen Ringelementen 1211, 1212 ringförmig umschlossen ist, deren Materialdicke im Vergleich zur Materialdicke des Durchstossteils 1210 wesentlich grösser ist. Die Materialdicke des unmittelbar an das Durchstossteil 1210 anschliessenden Ringelements 1211 ist etwa doppelt so gross, wie die Materialdicke des Durchstossteils 1210 und weist somit eine erhöhte mechanische Festigkeit auf und kann beim Durchstossen eines Kabels in die Länge gezogen werden, um einen rohrförmigen Trichterhals zu bilden, der das Kabel fest umschliesst.

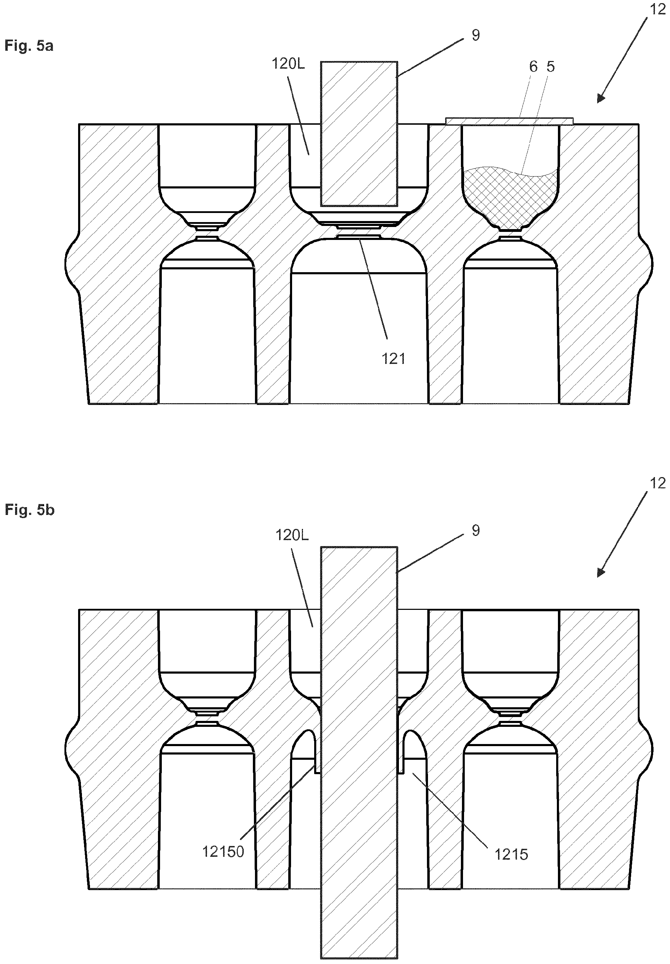

Figur 5a zeigt den Weichkörper 12 in einer geschnittenen Ansicht mit intakter Körpermembran 121, bevor diese mit einem durch die Körperbohrung 120L hindurchgeführten Kabel 9 durchstossen wird.

In vorzugsweisen Ausgestaltungen werden die Körperbohrungen 120 zumindest teilweise mit Klebstoff 5 gefüllt und durch eine Folie 6 abgedeckt. In diesem Fall würde der Klebstoff 5 erst aktiviert, nachdem die Folie 6 mit einem Kabel 9 durchstossen wird. Der Klebstoff 5 kann die Hafteigenschaften des Weichkörpers 12 gegenüber dem durchgeführten Kabel 9 verbessern oder nach Wunsch des Anwenders wahlweise ergänzen.

Figur 5b zeigt den Weichkörper 12 in der Schnittdarstellung von Figur 5a mit einer von einem Kabel 9 durchstossenen Körpermembran 1215. Die durchstossene Körpermembran 1215 bildet eine vorteilhafte Trichterform mit einem relativ langen, rohrförmigen Trichterhals 12150, welcher das Kabel 9 über eine Länge von einigen Millimetern dicht umschliesst und eng am Kabelmantel anliegt. Durch die trichterförmig ausgebildeten Körpermembranen 1215 erfolgt eine gasdichte und flüssigkeitsdichte Abdichtung der Kabeldurchführungsvorrichtung 1 in bestücktem Zustand. Die trichterförmige Körpermembran 1215 bzw. der Trichterhals 12150 bildet eine grosse Auflagefläche für das Kabel 9, was erfindungsgemäss zu einer guten Haftung der beiden Komponenten führt. Die optimale Verbindung bleibt auch nach längerer Zeit erhalten, da die durchstossene Körpermembran 1215 stets bestrebt ist, ihre ursprüngliche Form wieder anzunehmen und daher mit bleibendem Anpressdruck am Kabel 9 anliegt. Dadurch bleiben die vorteilhaften Eigenschaften der vorliegenden Erfindung permanent erhalten. Einerseits erfolgt somit eine optimale Abdichtung der Kabeldurchführung und anderseits ergibt sich eine stabile Zugsentlastung der durchgeführten Kabel 9.

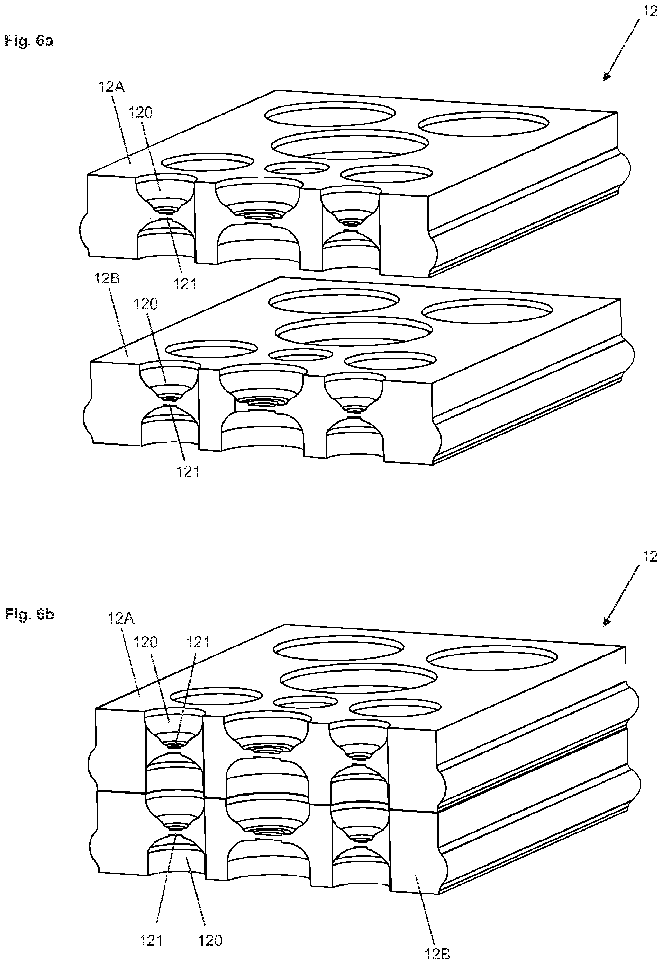

Figur 6a zeigt eine erfindungsgemässe Ausführung eines Weichkörpers 12 mit zwei komplanaren Körpermodulen 12A, 12B in einer geschnittenen Explosionsdarstellung. Jedes der Körpermodule 12A; 12B umfasst Körperbohrungen 120 für die Durchführung von Kabeln, welche durch je eine Körpermembran 121 verschlossen sind.

Figur 6b zeigt den Weichkörper aus Figur 6a mit zusammengefügten Körpermodulen 12A, 12B. Die beiden Körpermodule 12A, 12B sind baugleich ausgeführt und umfassen je koaxiale Körperbohrungen 120. Bei dieser Ausführungsform werden von einem Kabel 9 zwei Körpermembranen 121 seriell durchstossen. Durch die Verdoppelung der dadurch entstehenden trichterförmigen Körpermembranen 1215 wird die Dichtigkeit und Stabilität der Kabeldurchführungsvorrichtung 1 weiter erhöht.

Ebenso wird die Zugsentlastung durch die gesamthafte Vergrösserung der Berührungsfläche zwischen Kabel 9 und Körpertrichtern 1215 entsprechend erhöht. Durch Übereinanderstapeln einzelner Körpermodule 12A, 12B, ... kann ein Weichkörper 12 mit beliebig vielen Körpermembranen 121 erreicht werden, die von einem Kabel 9 seriell durchstossen werden können und die dieses in der Folge dicht abschliessend sicher halten.

Figur 7a zeigt eine teilweise mit Kabeln 9F, 9G, ... bestückte Kabeldurchführungsvorrichtung 1 in einer vorteilhaft ausgeführten Rahmenstruktur 2, die an einem Schaltschrank montierbar ist.

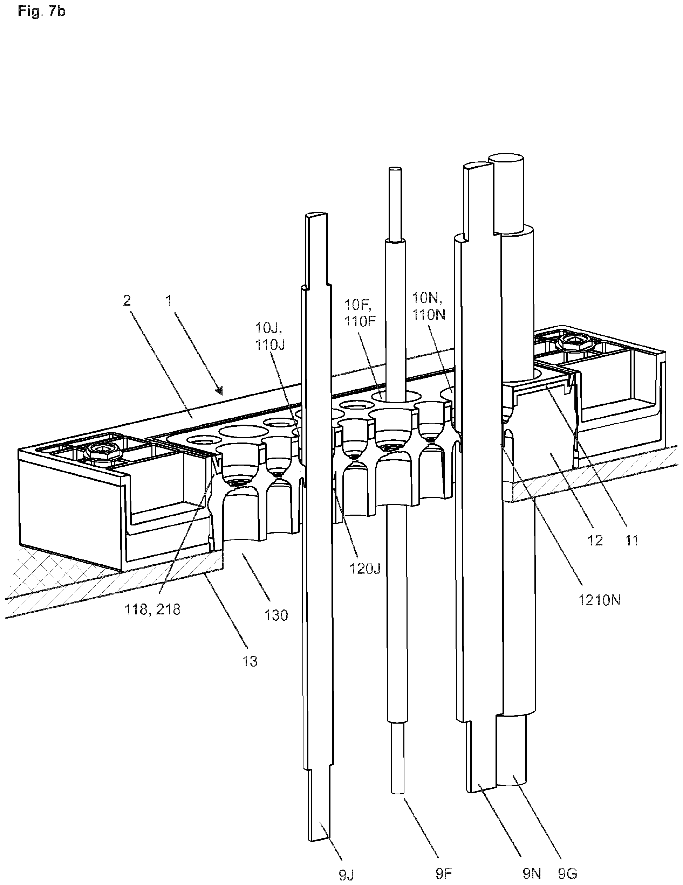

Figur 7b zeigt in Schnittdarstellung entlang der Schnittlinie C--C von Figur 7a die in eine Rahmenstruktur 2 eingesetzte Kabeldurchführungsvorrichtung 1, die an der Wand 13 eines Schaltschranks anliegt und durch Schrauben mit dieser verbunden ist. Der Weichkörper 12 liegt dicht abschliessend an der Wand 13 des Schaltschranks, die die eine zweite Grenzplatte bildet und mit einer grösseren Plattenöffnung 130 versehen ist, durch die installierten Kabel 9 in den Schaltschrank ein führbar sind. Der Weichkörper 12 ist daher zwischen der ersten Grenzplatte 11 und der Wand 13 des Schaltschranks stabil gehalten.

### Bezugszeichenliste

- 1: Kabeldurchführungsvorrichtung
- 10: Durchführungsöffnungen
- 11: erste Grenzplatte
- 110: Plattenbohrungen in der ersten Grenzplatte
- 118: Kopplungselement, Rastelement
- 12: Weichkörper
- 12A, 12B: Körpermodule
- 120: Körperbohrung
- 121: Körpermembran
- 1210: Durchstossteil
- 1211, 1212: Ringelemente
- 1215: durchstossene Körpermembran
- 128: Dichtungslippe
- 13: zweite Grenzplatte
- 130: Plattenbohrungen in der zweiten Grenzplatte
- 138: Kopplungselement, Rastelement
- 2: Rahmenstruktur
- 218, 238: Kopplungselement, Rastelement
- 29: Montagebohrung
- 5: Klebstoff
- 6: Folie
- 8: Klemmkörper
- 9: Kabel

## Patentansprüche

1. Vorrichtung (1) zur abgedichteten Durchführung wenigstens eines Kabels (9) durch eine Trennwand, wie eine Gehäusewand eines elektrischen Geräts oder eine Gehäuseschale eines Steckverbinders, umfassend einen Weichkörper (12), der zur abgedichteten Durchführung des Kabels (9) geeignet ist und der von einer Dichtungslippe umschlossen ist, die in eine Rahmenstruktur (2), innerhalb welcher der Weichkörper (12) kraftschlüssig oder formschlüssig und lösbar gehalten ist, eingreift und den Raum zwischen dem Weichkörper (12) und der Rahmenstruktur (2) dicht abschliesst und der wenigstens eine der Durchführung des Kabels (9) dienende Körperbohrung (120) aufweist, innerhalb der wenigstens eine verschlossene Körpermembran (121) vorgesehen ist, die durch Krafteinwirkung auftrennbar ist und die mit dem Weichkörper (12) eine Einheit bildet, **dadurch gekennzeichnet, dass** der Weichkörper (12) an der Unterseite an einer formstabilen zweiten Grenzplatte (13), gegebenenfalls einer Montagewand, anliegt und dass die Körperbohrungen (120A, 120B, ...) unterschiedliche Durchmesser aufweisen, so dass für Kabel (9) mit unterschiedlichen Durchmessern passende Körperbohrungen (120A, 120B, ...) vorliegen, und dass sich die Körperbohrungen (120) vorzugsweise beidseitig der Körpermembran (121) in der Form eines Trichters oder eines Konus gegen die Körpermembran (121) verjüngen.

2. Kabeldurchführungsvorrichtung (1) nach Anspruch 1, **dadurch gekennzeichnet, dass** der Weichkörper (12) mehrere Körperbohrungen (120A, 120B, ...) aufweist, innerhalb denen je wenigstens eine verschlossene oder von einem Kabel (9) durchstossene Körpermembran (121) vorgesehen ist.

3. Kabeldurchführungsvorrichtung (1) nach Anspruch 1 oder 2, **dadurch gekennzeichnet, dass** der Weichkörper (12) auf der Unterseite und/oder der Oberseite, die senkrecht zu den Körperbohrungen (120A, 120B, ...) verlaufen, thermisch oder chemisch behandelt und dadurch mechanisch verfestigt ist.

4. Kabeldurchführungsvorrichtung (1) nach einem der Ansprüche 1-3, **dadurch gekennzeichnet, dass** die Körpermembran (121) ein gegebenenfalls mit einer Sollbruchstelle versehenes zentrales Durchstossteil (1210) aufweist, das von wenigstens einem konzentrisch dazu verlaufenden Ringelement (1211, 1212) umschlossen ist, dessen Dicke um wenigstens 50% höher ist als die Dicke der Körpermembran (121) und das als Dichtungslippe für ein installiertes Kabel (9) dient.

5. Kabeldurchführungsvorrichtung (1) nach einem der Ansprüche 1-4, **dadurch gekennzeichnet, dass** die von einem Kabel (9) durchstossene Körpermembran (1215) eine Trichterform mit einem Trichterhals (12150) bildet, welcher das installierte Kabel (9) dicht abschliessend und mechanisch fest hält.

6. Kabeldurchführungsvorrichtung (1) nach einem der Ansprüche 1-5, **dadurch gekennzeichnet, dass** der Weichkörper (12) wenigstens zwei aneinander liegende Körpermodule (12A, 12B) mit Körperbohrungen (120A, 120B, ...) aufweist, die koaxial zueinander verlaufen und die je wenigstens eine Körpermembran (121) aufweisen.

7. Kabeldurchführungsvorrichtung (1) nach Anspruch 6, **dadurch gekennzeichnet, dass** die Körpermodule (120A, 120B) identisch oder komplementär zueinander ausgestaltet und vorzugsweise formschlüssig miteinander koppelbar sind.

8. Kabeldurchführungsvorrichtung (1) nach einem der Ansprüche 1-7, **dadurch gekennzeichnet, dass** der Weichkörper (12) mit den Körpermembranen (121) aus einem Körpermaterial besteht, das als Haftmittel oder Klebmittel dient oder dass die Körperbohrungen (120A, 120B, ...) ein Haftmittel oder Klebstoff (5) enthalten und/oder durch eine Folie (6) abgedeckt sind.

9. Kabeldurchführungsvorrichtung (1) nach Anspruch 8, **dadurch gekennzeichnet, dass** die Klebewirkung des Körpermaterials oder des Klebstoffes (5) unter Einfluss von Licht, Luft, Wärme oder Flüssigkeit aktiviert wird.

10. Kabeldurchführungsvorrichtung (1) nach einem der Ansprüche 1-9, **dadurch gekennzeichnet, dass** der Weichkörper (12) mit mehreren Kabeln (9) bestückt ist, wodurch ein vorkonfektionierter Kabelbaum gebildet wird.

11. Kabeldurchführungsvorrichtung (1) nach einem der Ansprüche 1-10, **dadurch gekennzeichnet, dass** das Körpermaterial des Weichkörpers (12; 12A, 12B) auf einem Polyurethan-Gel-System oder einem Silikon-Gel-System basiert oder aus Latex oder Gummi besteht.

12. Kabeldurchführungsvorrichtung (1) nach einem der Ansprüche 1-11, **dadurch gekennzeichnet, dass** der Weichkörper (12) an der Oberseite an einer formstabilen ersten Grenzplatte (11) anliegt, wobei wenigstens die erste Grenzplatte (11) mit Plattenbohrungen (110A, 110B, ...) versehen ist, die vorzugsweise etwa die gleichen Durchmesser wie die Körperbohrungen (120A, 120B, ...) aufweisen und die konzentrisch dazu angeordnet sind.

13. Kabeldurchführungsvorrichtung (1) nach Anspruch 12, **dadurch gekennzeichnet, dass** zumindest eine der Grenzplatten (11) kraftschlüssig oder formschlüssig und lösbar innerhalb der Rahmenstruktur (2) gehalten ist.

## Claims

1. Device (1) for the sealed passage of at least one cable (9) through a partition, such as a housing wall of an electrical device or a housing shell of a connector, comprising a soft body (12), which is suitable for the sealed passage of the cable (9), the soft body (12) is enclosed by a sealing lip, which engages in the frame structure (2), within which the soft body (12) is held, and tightly closes the space between the soft body (12) and the frame structure (2) and the soft body (12) has at least one body bore (120) serving to pass through the cable (9), within which there is provided at least one closed body membrane (121) which can be separated by the action of force, **characterized in that** the soft body (12) is arranged at the end of a stable second limiting plate (13), optionally a mounting wall, and that the bores (120A, 120B,...) have different diameters such that there are bores (120A, 120B,...) adapted for cables (9) with different diameters are present and that the bores (120) taper preferably on both sides of the membrane (121) and in the direction of the membrane (121) in the form of a funnel or conus.

2. Cable feedthrough device (1) according to claim 1, **characterized in that** the soft body (12) has a plurality of body bores (120A, 120B, ...) inside which at least one closed body membrane (121) pierced by a cable (9) is provided.

3. Cable feedthrough device (1) according to claim 1 or 2, **characterized in that** the soft body (12) on the bottom and / or the top, which run perpendicular to the body bores (120A, 120B, ...), thermally or chemically treated and thereby mechanically solidified.

4. Cable feedthrough device (1) according to any one of claims 1-3, **characterized in that** the body membrane (121) has an optionally provided with a predetermined breaking point central piercing part (1210) which is surrounded by at least one concentrically extending annular element (1211, 1212), its thickness is at least 50% higher than the thickness of the body membrane (121) and serves as a sealing lip for an installed cable (9).

5. Cable feedthrough device (1) according to one of claims 1-4, **characterized in that** the body membrane (1215) punctured by a cable (9) forms a funnel shape with a funnel neck (12150) which tightly and mechanically seals the installed cable (9) holds.

6. Cable feedthrough device (1) according to any one of claims 1-5, **characterized in that** the soft body (12) has at least two adjacent body modules (12A, 12B) having body bores (120A, 120B, ...) which are coaxial with each other and each have at least one body membrane (121).

7. Cable feedthrough device (1) according to claim 6, **characterized in that** the body modules (120A, 120B) are designed to be identical or complementary to one another and preferably can be coupled to one another in a form-fitting manner.

8. Cable feed-through device (1) according to one of claims 1-7, **characterized in that** the soft body (12) with the body membranes (121) consists of a body material serving as an adhesive or adhesive or **in that** the body bores (120A, 120B, ...) contain an adhesive or adhesive (5) and / or are covered by a film (6).

9. Cable bushing device (1) according to claim 8, **characterized in that** the adhesive effect of the body material or the adhesive (5) is activated under the influence of light, air, heat or liquid.

10. Cable feedthrough device (1) according to any one of claims 1-9, **characterized in that** the soft body (12) is equipped with a plurality of cables (9), whereby a prefabricated cable harness is formed.

11. Cable feed-through device (1) according to one of claims 1-10, **characterized in that** the body material of the soft body (12; 12A, 12B) is based on a polyurethane gel system or a silicone gel system or consists of latex or rubber.

12. Cable bushing device (1) according to any one of claims 1-11, **characterized in that** the soft body (12) at the top of a dimensionally stable first boundary plate (11) and / or on the bottom of a dimensionally stable second boundary plate (13), optionally a mounting wall , is applied, wherein at least the first boundary plate (11) with plate holes (110A, 110B, ...) is provided, which preferably have approximately the same diameter as the body bores (120A, 120B, ...) and which are arranged concentrically thereto.

13. Cable feedthrough device (1) according to claim 12, **characterized in that** the soft body (12) and the at least one boundary plate (11) are held non-positively or positively and releasably within a frame structure (2).

## Revendications

1. Dispositif (1) pour le passage étanche d'au moins un câble (9) à travers une cloison, telle qu'une paroi de boîtier d'un dispositif électrique ou une enveloppe de boîtier de connecteur, comprenant un corps souple (12) adapté au passage étanche du câble (9) et qui est entouré par une lèvre d'étanchéité qui pénètre dans la structure de châssis (2), dans laquelle le corps mou (12) est maintenus de manière non positive ou positive, et ferme de manière étanche l'espace entre le corps mou (12) et la structure de châssis (2), et que le corps mou (12) présente au moins un alésage (120) destiné à traverser le câble (9), dans lequel est prévue au moins une membrane de corps fermée (121) pouvant être séparée par l'action d'une force et formant une unité avec le corps mou (12) **caractérisé en ce que** le corps mou (12) est arrangé au fond d'une seconde plaque limite (13) dimensionnellement stable, éventuellement une paroi de montage , et que les alésages (120A, 120B,...) présentent des diamètres différents tel que des alésages (120A, 120B,...) adaptés aux câbles (9) à diamètres différents sont présents et que les alésages (120) se rajeunissent de préférence des deux côtés de la membrane (121) en forme d'entonnoir ou conique.

2. Dispositif de traversée de câbles (1) selon la revendication 1, **caractérisé en ce que** le corps souple (12) présente plusieurs alésages (120A, 120B, ...) à l'intérieur desquels est prévue au moins une membrane à corps fermé (121) ou percée d'un câble (9).

3. Dispositif de traversée de câbles (1) selon la revendication 1 ou 2, **caractérisé en ce que** le corps mou (12) situé en bas et / ou en haut, perpendiculaire aux alésages du corps (120A, 120B, ...), traité thermiquement ou chimiquement solidifié mécaniquement.

4. Dispositif de traversée de câble (1) selon l'une quelconque des revendications 1 à 4, **caractérisé en ce que** la membrane de corps (121) comporte éventuellement une partie centrale de perçage (1210) à point de rupture prédéterminé entourée d'au moins un élément annulaire (1211, 1212) s'étendant concentriquement, son épaisseur est supérieure d'au moins 50% à l'épaisseur de la membrane du corps (121) et sert de lèvre d'étanchéité pour un câble installé (9).

5. Dispositif de traversée de câbles (1) selon l'une des revendications 1 à 4, **caractérisé en ce que** la membrane de corps (1215) percée par un câble (9) forme un entonnoir avec un col en entonnoir (12150) qui ferme hermétiquement et tient mécaniquement le câble installé (9) .

6. Dispositif de traversée de câble (1) selon l'une quelconque des revendications 1 à 5, **caractérisé en ce que** le corps mou (12) au moins deux modules de corps adjacents (12A, 12B) ont des alésages de corps (120A, 120B, ...) coaxiaux et chacun a au moins une membrane corporelle (121).

7. Dispositif de traversée de câbles (1) selon la revendication 6, **caractérisé en ce que** les modules de corps (120A, 120B) sont identiques ou complémentaires et peuvent de préférence être couplés les uns aux autres.

8. Dispositif de traversée de câble (1) selon l'une des revendications 1 à 7, **caractérisé en ce que** le corps mou (12) avec les membranes de corps (121) est constitué d'un matériau de corps servant d'adhésif ou d'adhésif ou que le corps perce (120A, 120B, ...) contiennent un adhésif ou un adhésif (5) et / ou sont recouverts d'un film (6).

9. Dispositif de passage de câbles (1) selon la revendication 8, **caractérisé en ce que** l'effet adhésif du matériau du corps ou de l'adhésif (5) est activé sous l'influence de la lumière, de l'air, de la chaleur ou d'un liquide.

10. Dispositif de traversée de câbles (1) selon l'une quelconque des revendications 1 à 9, **caractérisé en ce que** le corps mou (12) est équipé de plusieurs câbles (9), ce qui permet de former un arbre de câbles préfabriqué.

11. Dispositif de traversée de câble (1) selon l'une des revendications 1 à 10, **caractérisé en ce que** le matériau de corps du corps mou (12; 12A, 12B) est à base de gel polyuréthane ou de gel de silicone ou est constitué de latex ou de caoutchouc.

12. Dispositif de douille de câble (1) selon l'une quelconque des revendications 1 à 11, **caractérisé en ce que** le corps mou (12) situé au sommet d'une première plaque limite dimensionnellement stable et / ou au fond d'une seconde plaque limite dimensionnellement stable, éventuellement une paroi de montage , est appliqué, dans lequel au moins la première plaque limite (11) avec des trous de plaque (110A, 110B, ...) est prévue, qui ont de préférence approximativement le même diamètre que les alésages de corps (120A, 120B, ...) et qui sont disposés concentriquement à ceux-ci.

13. Dispositif de traversée de câbles (1) selon la revendication 12, **caractérisé en ce que** le corps mou (12) et la au moins une plaque de délimitation (11) sont maintenus de manière non positive ou positive dans une structure de châssis (2).
